# DEMANDE DE BREVET EUROPEEN

(11) **EP 0 635 743 A1**
(43) Date de publication de la demande: **25.01.1995**
(21) Numéro de dépôt: 94401311.9
(22) Date de dépôt: 10.06.1994
(51) Int. Cl.: G02B 23/12, G02B 23/18

(54) **Dispositif optique binoculaire à résolution et/ou champ de vision augmenté, notamment pour la vision nocturne**

(30) Priorité: 14.06.1993 FR 9307138
(71) Demandeur: SEXTANT AVIONIQUE, F-92360 Meudon-la-Forêt (FR)
(72) Inventeur: Francois, Jean-Michel, F-92402 Courbevoie Cédex (FR); Lefort, Yves, F-92402 Courbevoie Cédex (FR)
(74) Mandataire: Benoit, Monique

(57) **Abrégé**

L'invention a pour objet un dispositif optique binoculaire, du type lunettes, à résolution et/ou champ de vision augmenté.

Ce dispositif est notamment applicable à la constitution de lunettes de vision nocturne, permettant de superposer à l'image visible une image infrarouge intensifiée, de telles lunettes pouvant être portées par exemple par un pilote d'avion ou d'hélicoptère et lui permettant d'observer le paysage de jour comme de nuit.

Le dispositif comporte, pour chaque oeil du pilote, un objectif (O_{IL}) d'axe optique donné (Y₁₁, Y₁₂), recevant la lumière infrarouge. Les axes optiques des deux objectifs font un angle tel que, lors de l'observation d'un paysage à l'infini, les deux champs de vision soient sécants.

## Description

L'invention a pour objet un dispositif optique binoculaire, du type lunettes, à résolution et/ou champ de vision augmenté.

Ce dispositif est notamment applicable à la constitution de lunettes de vision nocturne, permettant de superposer à l'image visible une seconde image provenant d'un dispositif à intensification de lumière, de telles lunettes pouvant être portées par exemple par un pilote d'avion ou d'hélicoptère ou par un fantassin, et lui permettant d'observer le paysage de jour comme de nuit.

Des lunettes de vision nocturnes sont par exemple décrites dans le brevet PCT WO 89/04008. Elles comportent principalement, pour chaque oeil du pilote, un circuit optique pour la lumière directement visible par le pilote, un circuit d'intensification permettant d'intensifier la lumière infrarouge émise par une scène nocturne et de la convertir en lumière visible par l'oeil du pilote, et enfin un mélangeur optique permettant de combiner ces circuits et de diriger les deux images qu'ils produisent vers l'oeil du pilote. Dans un dispositif de ce type, les axes de visée de chacun des yeux sont parallèles et les champs de vision à l'infini sont confondus.

Si on souhaite augmenter la résolution d'un tel dispositif, il est nécessaire d'augmenter celle de ses éléments optiques et, notamment, celle de l'intensificateur d'image, ce qui se traduit par un intensificateur plus complexe donc plus volumineux et/ou plus lourd et, bien entendu, plus onéreux.

La présente invention a pour objet un dispositif optique binoculaire permettant d'augmenter la résolution sans en augmenter substantiellement le coût ou l'encombrement.

A cet effet, le dispositif comporte, pour chaque oeil du pilote :
· un objectif d'axe optique donné, recevant la lumière issue d'un paysage observé par le pilote et formant une image du paysage ;
· un oculaire, destiné à rejeter l'image qu'il reçoit à l'infini et rendre ainsi le paysage visible pour le pilote ;
· un système optique, comportant par exemple un intensificateur d'image, disposé entre les deux éléments précédents.

Selon l'invention, les axes optiques des deux objectifs ne sont pas parallèles mais font un angle tel que, lors de l'observation d'un paysage à l'infini, les deux champs de vision sont sécants mais non superposés.

De la sorte, on obtient une résolution améliorée par rapport à ce qu'elle serait si les champs de vision de chacun des yeux étaient confondus mais chacun plus large, de façon à couvrir sensiblement le même champ total donné. Egalement, à résolution donnée, on obtient un élargissement du champ de vision; par extension, toute solution intermédiaire entre ces deux configurations (champs de vision donné ou résolution donnée) est possible, dans la limite d'un recouvrement partiel des deux champs.

D'autres objets, particularités et résultats de l'invention ressortiront de la description suivante, donnée à titre d'exemple et illustrée par les dessins annexés qui représentent :
- les figures 1 et 2, respectivement une vue en perspective et une vue de dessus d'un exemple de dispositif binoculaire selon l'invention ;
- la figure 3, un schéma illustrant le fonctionnement du dispositif selon l'invention ;
- les figures 4a, 4b et 4c, le schéma d'un mode de réalisation d'une partie du dispositif des figures précédentes ;
- la figure 4d, une variante de réalisation de la figure 4c.

Sur ces différentes figures, les mêmes références se rapportent aux mêmes éléments.

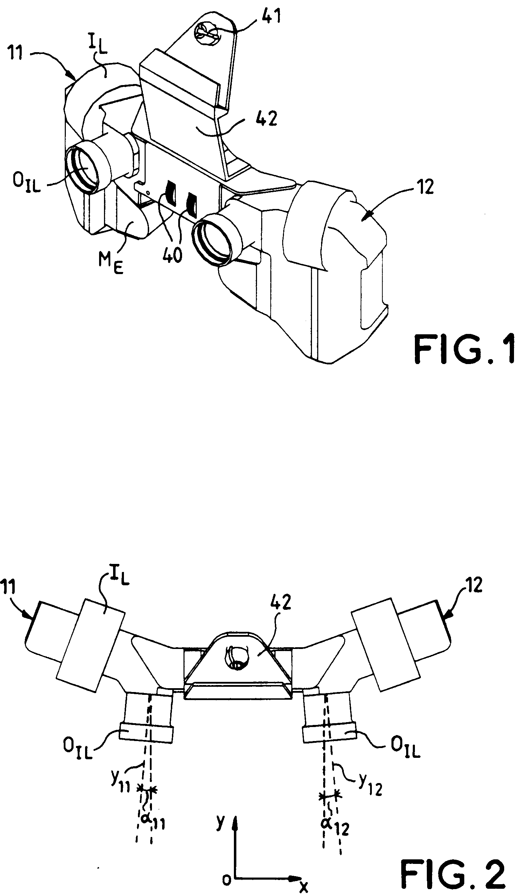

La figure 1 représente donc une vue en perspective d'un dispositif binoculaire, par exemple des lunettes de vision nocturne, dont la résolution et/ou le champ de vision est (sont) augmenté(s) selon l'invention. La figure 2 représente ce même dispositif vu de dessus, c'est-à-dire dans un plan XOY.

Ces lunettes se composent de deux ensembles optiques, 11 et 12, disposés chacun devant un oeil de l'observateur (pilote par exemple) et reliés par des moyens mécaniques 42, portant par exemple des moyens 41 de fixation de l'ensemble au casque du pilote et des moyens 40 de réglage, du type molette, de la distance interoculaire.

Chacun des ensembles optiques (11 et 12) comporte :
· un objectif O_{IL}, d'axe optique donné (Y₁₁ pour l'ensemble 11, Y₁₂ pour l'ensemble 12), du type objectif de prise de vue, recevant la lumière issue d'un paysage observé par le pilote et formant une image de ce paysage; dans cet exemple, l'objectif O_{IL} reçoit la lumière infrarouge, c'est-à-dire les longueurs d'onde comprises dans la bande spectrale 0,7 à 1 µm, provenant d'un paysage nocturne observé ;
· un système optique dont le détail n'est pas visible sur les figures 1 et 2, qui comporte dans cet exemple un intensificateur d'image IL et qui permet de guider la lumière infrarouge vers l'intensificateur IL puis l'image intensifiée vers un mélangeur M_{E} via un oculaire ;
· le mélangeur M_{E} qui, d'une part, permet de réfléchir la lumière intensifiée 22 vers l'oeil de l'observateur et, d'autre part, qui est transparent à la lumière visible provenant du paysage à l'infini.

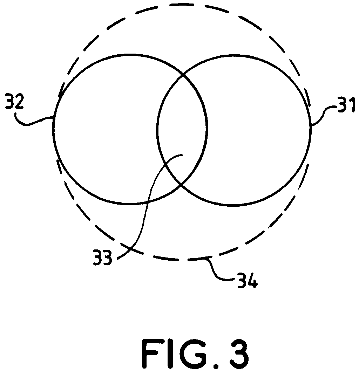

Selon l'invention, les axes optiques Y₁₁ et Y₁₂ des objectifs O_{IL} des ensembles 11 et 12 respectivement, ne sont pas parallèles. Ils font un angle, respectivement α₁₁ et α₁₂ , avec la direction OY de la lumière incidente. Les angles α₁₁ et α₁₂ sont choisis de telle sorte que, comme l'illustre la figure 3, le champ de vision 31 fourni par l'ensemble 11 et le champ de vision 32 fourni par l'ensemble 32, à l'infini, soient sécants (partie commune repérée 33) ; dans la pratique, des angles α₁₁ et α₁₂ de quelques degrés (typiquement inférieur à 10°) constituent un bon compromis.

A cet effet, les angles α₁₁ et α₁₂ peuvent ou non être choisis égaux et les axes Y₁₁ et Y₁₂ peuvent converger ou diverger.

Cette disposition a pour effet d'augmenter la résolution de l'image fournie au pilote.

En effet, dans un dispositif de ce type, la résolution est principalement limitée par le nombre N de points élémentaires d'image (ou pixels) que peut traiter chacun des intensificateurs d'image. Si on souhaite avoir un champ sensiblement équivalent à l'ensemble 31 et 32, il est nécessaire d'agrandir l'image fournie par un intensificateur sensiblement selon le cercle pointillé 34 de la figure 3, englobant les champs 31 et 32. Toutefois, cet agrandissement n'augmente bien entendu pas le nombre de pixels et diminue donc la résolution. Si, au contraire, les deux champs ne sont pas confondus, on obtient N pixels pour le champ 31, N pixels pour le champ 32, soit au total 2N pixels moins une fois ceux de la partie commune 33.

Inversement, pour une résolution donnée, l'invention permet d'augmenter le champ de vision, celui-ci s'étendant alors sur l'aire des surfaces combinées 31 et 32 et non sur l'aire d'une seule d'entre elles.

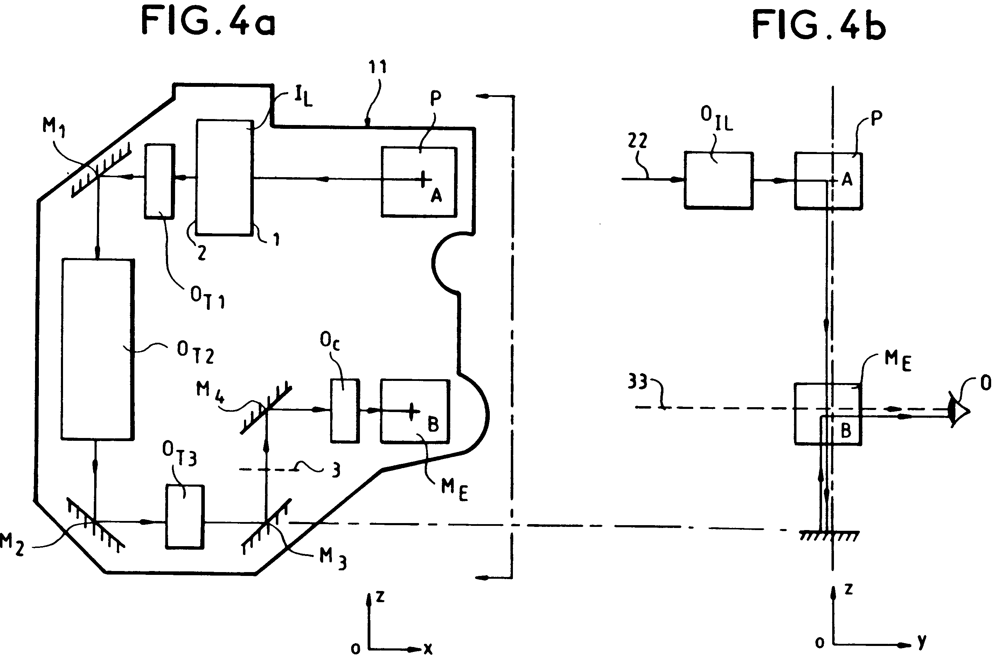

Par ailleurs, la réduction du champ optique de chaque ensemble conduit à diminuer le diamètre du faisceau, diminuer la masse et à simplifier l'optique, et, par suite, de simplifier le cas échéant le pliage du circuit optique de guidage entre objectif et oculaire, tel que décrit par exemple par les figures 4a-4c.

A titre d'exemple, pour des lunettes de vision nocturne, on peut choisir deux champs 31 et 32 circulaires de 30°, décalés pour obtenir un champ total de 40° avec un recouvrement de 20°, ce qui correspond à des angles α₁₁=α₁₂ voisins de 5°.

On a décrit ci-dessus le cas particulier où la résolution est surtout limitée par le nombre de pixels des intensificateurs de lumière mais, plus généralement, on sait que les dispositifs optiques ont toujours une résolution limitée par les lois de la Physique, et le fonctionnement décrit ci-dessus est toujours vrai. En effet, la limite de résolution d'un système optique est une petite partie du champ total; si on augmente ce champ total, la limite de résolution sera augmentée dans les mêmes proportions: la résolution, ou capacité à séparer deux points, sera moins bonne.

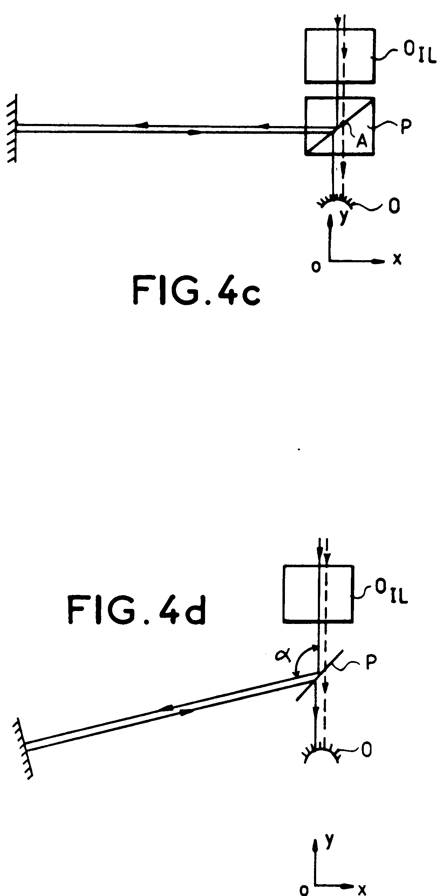

Les figures 4a, 4b et 4c sont des schémas d'un mode de réalisation d'un ensemble tel que 11 ou 12 de la figure 1, par exemple l'ensemble 11. La figure 4a est une vue de face, dans un plan XOZ normal au plan XOY de la figure 2, alors que la figure 4b est une vue de profil, c'est-à-dire dans un plan ZOY normal aux précédents, et la figure 4c, une vue de dessus dans le plan XOY.

La lumière infrarouge, repérée 22, provenant du paysage nocturne observé, est reçue par l'objectif O_{IL}. Celui-ci forme une image du paysage à l'infini, ou à une distance finie s'il existe un réglage de focalisation, sur la face d'entrée 1 du dispositif IL (face 1 du dispositif IL confondue avec le plan focal image de l'objectif O_{IL}), transformant la lumière infrarouge reçue en lumière visible avec intensification, tel qu'un tube intensificateur de lumière. L'objectif O_{IL} est disposé de préférence au-dessus de l'oeil du pilote, sur un axe parallèle à OZ. La lumière infrarouge 22 puis la lumière visible obtenue par l'intensification de cette lumière infrarouge, est illustrée en traits continus; elle est reçue par le dispositif selon un axe OY et elle est renvoyée dans le plan XOZ selon la direction OX par un dispositif P (point A), réalisé par exemple à l'aide d'un miroir ou, de préférence, d'un prisme de renvoi, ce qui permet de diminuer l'encombrement de l'objectif O_{IL}.

Un circuit optique permet de guider la lumière issue de l'intensificateur IL, dans le plan XOZ, jusqu'au un mélangeur M_{E} (point B) situé devant l'oeil de l'observateur. Ce mélangeur M_{E} peut être classiquement constitué de deux prismes rectangles accolés, dont la face commune (non visible sur les figures) forme un miroir semi-transparent, ou dichroïque ou holographique.

Ce circuit optique de guidage est formé d'un objectif de transport O_{T}, par exemple constitué de trois parties O_{T1}, O_{T2} et O_{T3}, rendu nécessaire par le fait que le trajet optique pour amener l'image intensifiée devant l'oeil est long, d'un oculaire O_{C} pour rejeter l'image reçue à l'infini, situé devant le mélangeur M_{E}, et de n=4 miroirs M₁, M₂, M₃ et M₄, qui sont disposés de sorte à renvoyer chacun la lumière à 90° de sa direction incidente, le nombre n dépendant du nombre d'objectifs utilisés (ici: deux objectifs, ce qui conduit à un nombre pair de miroirs).

Il apparaît donc que l'oeil de l'observateur O reçoit, d'une part, directement la lumière visible 33 parallèlement à la direction OY et, d'autre part, la lumière infrarouge 22, reçue également parallèlement à la direction OY, après intensification et conversion dans un circuit optique disposé selon le plan XOZ.

Dans ce mode de réalisation tel qu'il apparaît figure 4c, le circuit de guidage de la lumière infrarouge intensifiée et convertie est disposé dans un plan parallèle au plan XOZ, normal à la direction OY du rayonnement incident.

La figure 4d représente une variante de réalisation du dispositif selon l'invention, dans laquelle ce circuit de guidage est toujours disposé dans un plan mais celui-ci n'est plus perpendiculaire à la direction OY incidente: il fait un angle α avec la direction OY, supérieur à 90°, par exemple de l'ordre de 110°.

Cette disposition a pour but de diminuer l'encombrement du dispositif lorsqu'il est destiné à former des lunettes disposées sous la visière d'un casque de pilote, celles-ci pouvant alors suivre de plus près la forme du visage.

Il est à noter que le mode de réalisation de la figure 2 reprend cette variante de la figure 4d.

## Revendications

1. Dispositif optique binoculaire comportant deux ensembles, disposés respectivement devant les yeux d'un observateur, chaque ensemble comportant :
· un objectif (O_{IL}) d'axe optique donné (Y₁₁, Y₁₂), recevant la lumière issue d'un paysage observé par l'observateur et formant une image du paysage ;
· un oculaire (O_{C}), destiné à rejeter l'image qu'il reçoit à l'infini et rendre ainsi le paysage visible pour le pilote ;
le dipositif étant caractérisé par le fait que chaque ensemble comporte en outre un système optique, disposé entre les deux éléments précédents, et que les axes optiques des deux objectifs font un angle tel que, lors de l'observation d'un paysage à l'infini, les deux champs de vision sont sécants.

2. Dispositif optique selon la revendication 1, caractérisé par le fait que le système optique comporte un intensificateur d'image (IL).

3. Dispositif optique selon la revendication 1, caractérisé par le fait qu'il comporte en outre, disposé devant chaque oeil (O) de l'observateur, un mélangeur (M_{E}), situé selon une première direction devant l'oeil de l'observateur et transmettant directement la lumière visible (33) à l'observateur, que le système optique assure le guidage de la lumière reçue par l'objectif vers le mélangeur (M_{E}), le guidage s'effectuant dans un même plan ne contenant pas la première direction, ce système optique comportant :
- des moyens (IL) pour former une image visible intensifiée à partir d'une image infrarouge reçue ;
- un objectif de transport (O_{T1}, O_{T2}, O_{T3}) ;
- un nombre n de miroirs, n dépendant du nombre d'objectifs du dispositif ;
l'oculaire étant disposé entre l'objectif de transport et le mélangeur, ce dernier assurant la réflexion de l'image intensifiée selon la première direction vers l'oeil de l'observateur.

4. Dispositif selon la revendication 3, caractérisé par le fait que le plan des moyens de guidage fait un angle supérieur à 90° avec la première direction.

5. Dispositif selon la revendication 3, caractérisé par le fait que le nombre n de miroirs est pair.

6. Dispositif selon l'une des revendications précédentes, caractérisé par le fait que les axes optiques de chacun des objectifs, font un angle (α₁₁, α₁₂) de quelques degrés avec la direction de la lumière incidente.
